# EUROPEAN PATENT APPLICATION

(11) **EP 1 146 716 A1**
(43) Date of publication of application: **17.10.2001**
(21) Application number: 00107718.9
(22) Date of filing: 11.04.2000
(51) Int. Cl.: H04M 1/274

(54) **Method for automatic completion of dialing in a mobile handset**

(71) Applicant: ROBERT BOSCH GMBH, 70442 Stuttgart (DE)
(72) Inventor: Rosset, Gael, 9000 Aalborg (DK)

(57) **Abstract**

In a method for automatic completion of dialing in a mobile handset, at least one prior telephone number is stored. A number of significant digits is selected, the number of significant digits being at least one. Upon a dialing of a first set of digits of a called number, each digit of the first set of digits is compared to a corresponding digit of each of the prior telephone number(s), where the first set of digits has a number of digits equal to the number of significant digits. When the comparing indicates that each digit of the first set of digits matches the corresponding digit of one of the prior telephone number(s), then that prior telephone number is retrieved. The retrieved telephone number may then be displayed and automatically dialed, without the need for the user to manually enter the entire number.

## Description

### Related Technology

The present invention relates generally to a handset for a mobile communication systems in general, and, more specifically, to a method for automatic completion of dialing on a mobile handset.

A called telephone number on a mobile handset may be "dialed" by inputting numbers in any of a variety of ways, including manual keypad, voice recognition, touch-pad with text recognition and touch pen. The dialing typically continues until a full called telephone number has been entered. This process can be needlessly long with needless errors since a number to be dialed may often be the same as a number recently successfully dialed, received or previously stored in a "phone book" memory in the mobile phone.

### Advantages of the Invention

The present invention provides a method for personalizing a method for automatic completion of dialing in a mobile handset, characterized in that at least one prior telephone number is stored. A number of significant digits is selected, the number of significant digits being at least one. Upon a dialing of a first set of digits of a called number, each digit of the first set of digits is compared to a corresponding digit of each of the at least one prior telephone number, the first set of digits having a number of digits equal to the number of significant digits. When the comparing indicates that each digit of the first set of digits matches the corresponding digit of a first telephone number of the at least one prior telephone number, then the first telephone number is retrieved.

The present invention also provides a mobile handset for performing the method of the present invention for automatic completion of dialing in a mobile handset. A memory is provided for storing the at least one prior telephone number and a processor is provided for performing the comparing.

The present invention also provides an article comprising a storage medium, the storage medium having a set of instructions, the set of instructions being capable of being executed by at least one processor to implement a method for automatic completion of dialing in a mobile handset. At least one prior telephone number is stored. A number of significant digits is selected, the number of significant digits being at least one. Upon a dialing of a first set of digits of a called number, each digit of the first set of digits is compared to a corresponding digit of each of the at least one prior telephone number, the first set of digits having a number of digits equal to the number of significant digits. When the comparing indicates that each digit of the first set of digits matches the corresponding digit of a first telephone number of the at least one prior telephone number, then the first telephone number is retrieved.

The present invention provides increased number dialing speed and ease of dialing, while at the same time tending to reduce dialing errors since the retrieved telephone numbers may be previously successfully-dialed numbers or numbers previously stored in phone book list. Numbers which have been previously successfully called or received subsequently do not need to fully be re-dialed.

The present invention is compatible with mobile handsets employing voice recognition, touch-pads with text recognition and touch pens.

### Drawings

Further advantages of the present invention will become apparent from the claims and the description below, based on the drawings, in which:
Fig. 1 is a schematic diagram showing a mobile handset according to the present invention; and
Fig. 2 is a flowchart illustrating a method according to the present invention.

### Description

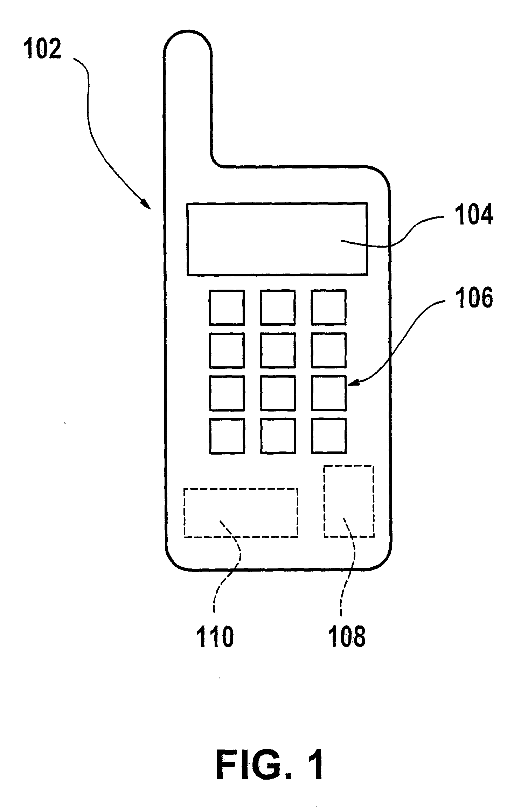

Referring to Fig. 1, a mobile handset 102 includes a display 104, a keypad 106, a processor 108 and memory 110. Mobile handset 102 may be any of a variety of mobile terminals capable of operating in any of a variety of systems, such as, for example, in a Global System for Mobile Telecommunications (GSM) system. Processor 108 may be any of various known processors for carrying out operations in mobile handset and for storing and retrieving data from memory 110. Processor 108 may be any suitable processor or microprocessor. Memory 110 may be any of a variety of memory registers and/or media types, such as dynamic random access memory (DRAM), etc., capable of storing data.

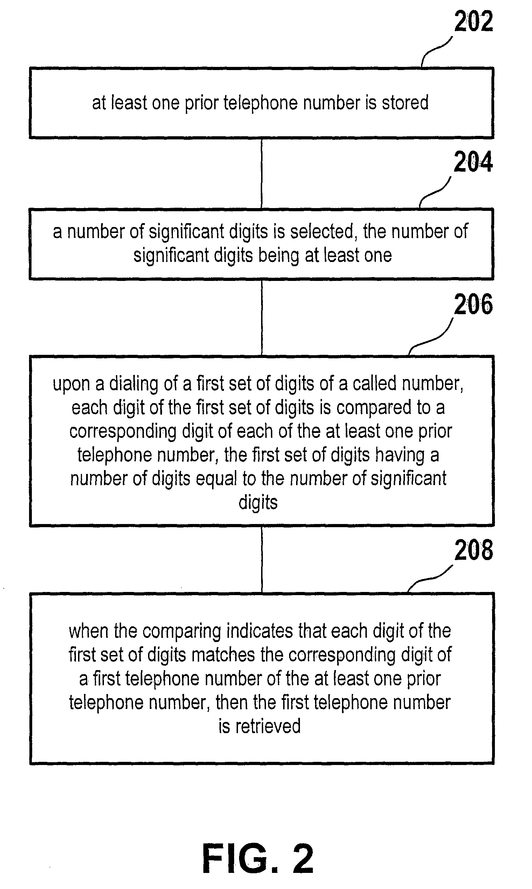

Fig. 2 shows a flowchart depicting a method according to the present invention. According to the present invention, at least one prior telephone number is stored (see block 202) in, for example, memory 110. The prior telephone number may be the number of the call last made from the handset, the number of the call last received by the handset, and/or a number previously stored by the user in a phone book list. A number of significant digits is selected (see block 204). The number of significant digits may be factory-set by the handset manufacturer or may be set by the user. The number of significant digits may be greater than or equal to one.

Referring further to Fig. 2, upon a dialing of a first set of digits of a called number, each digit of the first set of digits is compared to a corresponding digit of each of the at least one prior telephone number, the first set of digits having a number of digits equal to the number of significant digits (see block 206). This comparison is preferably performed by processor 108 and may be a "string compare" on the first set of digits. When the comparing indicates that each digit of the first set of digits matches the corresponding digit of a first telephone number of the at least one prior telephone number, then the first telephone number is retrieved (see block 208). The first telephone number is preferably then displayed on display 104.

As an example, suppose the last telephone number called by the user was 34512122. Suppose that the number of significant digits factory set or set by the user into the handset is three. As the user dials "345" the digits are displayed on display 104, for example in a bold font. After the user has dialed "345", the comparison of block 206 would indicate that these three digits match the first three digits of the last-called number 34512122. The full number 34512122 would then be displayed, for example with the digits "345" still in bold font. If the user desires to call this number, preferably he then presses a "call" button to establish the connection. Otherwise, the user may continue to dial the full desired number in the conventional manner.

In another example, suppose the last telephone number received by the user was 98131057 and further that the user has previously saved the number 98142536 in a phone book list. Suppose that the number of significant digits factory set or set by the user into the handset is three. As the user dials "981" the digits are displayed on display 104, for example in a bold font. After the user has dialed "981", the comparison of block 206 would indicate that these three digits match the first three digits of the last-received number 98131057 and of the number 98142536 from the phone book. Both these numbers would then be displayed, for example with the digits "981" in bold font. The user may then scroll between the two numbers and select the one he would like to call, if any. Preferably, the user then presses a "call" button to make the connection. If the user does not desire to call either of the displayed numbers, he may continue to dial the full desired number.

Preferably, a software program running on processor 108 effects the comparison, locking and unlocking functions according to the present invention. Such programming steps may, of course, be executed by another appropriate processor or processors. As such programming steps would be well-understood by a person of skill in the art, they are not further described herein. It should be noted that embodiments are also possible in which hardware elements replace the software.

Various embodiments within the scope of the present invention are possible. For example, various algorithms may be used for determining which telephone numbers are retrieved, such as last two called numbers, last three received numbers, two most recent phone book entries, etc. Additionally the significant digits dialed, as well as the first set of digits of "matched" numbers from memory, may be displayed in any type of font, such as highlighted or noticeable font, or the standard font. These and other variations are intended to be part of the present invention, the scope of which is intended to be limited only by the claims appended hereto.

## Claims

1. A method for automatic completion of dialing in a mobile handset, **characterized in that**
at least one prior telephone number is stored;
a number of significant digits is selected, the number of significant digits being at least one;
upon a dialing of a first set of digits of a called number, each digit of the first set of digits is compared to a corresponding digit of each of the at least one prior telephone number, the first set of digits having a number of digits equal to the number of significant digits; and
when the comparing indicates that each digit of the first set of digits matches the corresponding digit of a first telephone number of the at least one prior telephone number, then the first telephone number is retrieved.

2. The method according to claim 1, **characterized in that** the retrieved first telephone number is displayed.

3. The method according to claim 2, **characterized in that** the displayed first telephone number is displayed in a bold or other highlighted font.

4. The method according to claims 1-3, **characterized in that** the displayed first telephone number is automatically dialed.

5. The method according to claim 4, **characterized in that** the displayed first telephone number is automatically dialed in response to a user command.

6. The method according to claims 1-5, **characterized in that** when the comparing indicates that each digit of the first set of digits matches the corresponding digit of the first telephone number and matches the corresponding digit of a second telephone number of the at least one prior telephone number, then the first telephone number and the second telephone number are retrieved.

7. The method according to claim 6, **characterized in that** one of the retrieved first and second telephone numbers is selected by the user.

8. The method according to claim 7, **characterized in that** the selected telephone number is automatically dialed in response to a user command.

9. The method according to one of claims 1-8, **characterized in that** the at least one prior telephone number includes at least one of a most recently called telephone number, a most recently received telephone number and a phonebook entry.

10. A mobile handset for performing the method according to one of claims 1-9, **characterized in that**
a memory is provided for storing the at least one prior telephone number; and
a processor is provided for performing the comparing.

11. An article comprising a storage medium, the storage medium having a set of instructions, the set of instructions being capable of being executed by at least one processor to implement a method for automatic completion of dialing in a mobile handset, **characterized in that**
at least one prior telephone number is stored;
a number of significant digits is selected, the number of significant digits being at least one;
upon a dialing of a first set of digits of a called number, each digit of the first set of digits is compared to a corresponding digit of each of the at least one prior telephone number, the first set of digits having a number of digits equal to the number of significant digits; and
when the comparing indicates that each digit of the first set of digits matches the corresponding digit of a first telephone number of the at least one prior telephone number, then the first telephone number is retrieved.

12. The method according to claim 11, **characterized in that** the retrieved first telephone number is automatically dialed in response to a user command.
